# EUROPEAN PATENT SPECIFICATION

(11) **EP 1 270 058 B1**
(45) Date of publication and mention of the grant of the patent: **21.02.2007**
(21) Application number: 02078254.6
(22) Date of filing: 18.09.2000
(51) Int. Cl.: B01D 33/03, B07B 1/46

(54) **A screen for use in a shale shaker and method for using same**
Siebboden für eine Schiefer-Schüttelvorrichtung und Verfahren zur Anwendung
crible pour tamis vibrant et son utilisation

(30) Priority: 16.09.1999 US 397242; 05.08.2000 US 634610
(43) Date of publication of application: 02.01.2003
(62) Divisional of application: 00962688.8
(73) Proprietor: Varco I/P, Inc., Houston TX 77042-4200 (US)
(72) Inventor: Adams, Thomas Cole, Hockley, TX 77447 (US); Seyffert, Kenneth Wayne, Houston, TX 77018 (US); Largent, David Wayne, Cleveland, TX 77327 (US); Schulte, David Lee, Broussard, LA 70518 (US); Grichar, Charles Newton, Houston, TX 77009 (US); Walker, Jeffrey Earl, Lafayette, LA 70501 (US); Murray, Hector M., Willis, TX 77378 (US); Maroney III, James Francis, Houston, TX 77079 (US); McClung III, Guy Lamont, Spring, TX 77379 (US); Winkler, Joseph Charles, Houston, TX 77024 (US)
(74) Representative: Lucas, Brian Ronald

(56) References cited:
- WO-A-00/64558
- US-A- 1 344 747
- US-A- 5 417 858

## Description

The present invention relates to a screen for use in a shale shaker and a method for using same.

Shale shakers have been used for many years to separate particles in a wide array of industrial applications. One common application for shale shakers is in drilling operations to separate particles suspended in drilling mud. If drilled solids are not removed from the mud used during the drilling operation, re-circulation of the drilled solids can create weight, viscosity, and gel problems in the mud, as well as increasing wear on mud pumps and other mechanical equipment used for drilling.

A shale shaker generally includes at least one screen which is generally flat and mounted generally horizontally on a vibrating mechanism or shaker that imparts either a rapidly reciprocating linear, elliptical or circular motion to the screen. A shale shaker may comprise a series of screens arranged in tiered or flat disposition with respect to each other. In use, the vibrating mechanism vibrates the screen. Circulated drilling mud is poured on to a back end of the vibrating screen, usually from a pan mounted above the screen. The material generally flows toward the front end of the screen. Large particles are unable to pass through the screen, remaining on top of the screen and moving toward the front of the screen where they are collected. The smaller particles and fluid flows through the screen and collects in a pan beneath the screen.

A screen may have a fine screen cloth. The screen may have two or more overlying layers of screen cloth. The layers may be bonded together and be provided with a support, supports, or a perforated or apertured plate beneath the screen or screens. The frame of the vibrating screen is resiliently suspended or mounted upon a support and is caused to vibrate by a vibrating mechanism, for example an unbalanced weight on a rotating shaft connected to the frame. Each screen may be vibrated by vibratory equipment to create a flow of trapped solids on top surfaces of the screen for removal and disposal of solids. The fineness or coarseness of the mesh of a screen may vary depending upon mud flow rate and the size of the solids to be removed.

Many screens used with shale shakers are flat or nearly flat which are known as two-dimensional screens. Other screens having corrugated, depressed, or raised surfaces are three-dimensional. US-A-5,417,793, US-A-5,417,858 and US-A-5,417,859 disclose non-flat screens for use with shale shakers. These screens have a lower planar apertured plate with a multiplicity of spaced-apart apertures or openings therethrough. Undersides of troughs of undulating screening material are bonded to the apertured plate. Such screens present a variety of problems, deficiencies, and disadvantages, including: decreased flow area due to area occluded by solid parts of the apertured plate; necessity to either purchase relatively expensive apertured plate or provide for in-house perforating of a solid plate; plate weight increases wear on parts such as rubber screen supports or cushions and can inhibit required vibration; large plate surface area requires relatively large amount of bonding means for bonding screens to the plate; and a finished screen which is relatively heavy increases handling problems, hazards, and cost of shipping. The screens also have to be able to provide a throughput for a large quantity of fluid. There are also problems involved with the ease of manufacture of the screen assemblies.

US-A-5,417,858 discloses a screen having a ridge which is triangular in cross-section. The triangular ridge is made from two overlying layers of screening material. Two wing portions of screening material are folded over an end of the ridge and welded together to form a flat, vertical end to the ridge.

US-A-1,344,747 discloses a shaker plate for washing coal and ores. The shaker plate comprises riffles formed by corrugating the shaker plate.

According to the invention, there is provided a screen assembly for a shale shaker for separating particles from a particle laden drilling mud, the screen assembly comprising a screen of undulating mesh comprised of a plurality of alternating ridges and valleys, characterised in that said screen assembly further comprises ridge ends at either end of said plurality of alternating ridges and valleys, each ridge end comprising a plurality of alternating ridges and valleys of mesh having integral moulded seamless portions of mesh covering ends of said ridges wherein slots or notches are cut in said ridge end in order to facilitate moulding.

Preferred or advantageous aspects of the invention are set out in claims 2 to 8.

The invention also provides a method for separating particles from a particle laden drilling mud with a shale shaker, the method comprising the steps of introducing the particle laden drilling mud onto a screen assembly in the vibratory separator, the screen assembly comprising a screen of undulating mesh comprised of a plurality of alternating ridges and valleys, said screen assembly further comprising ridge ends at either end of said plurality of alternating ridges and valleys, each ridge end comprising a plurality of alternating ridges and valleys of mesh having integral moulded seamless portions of mesh covering ends of said ridges wherein slots or notches are cut in said ridge end in order to facilitate moulding and further comprising the step of separating particles from the drilling mud by vibrating the screen assembly in the shale shaker. Preferably, the integral moulded seamless portions of mesh tapers down from said ridges to said valleys.

For a better understanding of the invention, reference will now be made, by way of example, to the accompanying drawings, in which:
Figures 1A to 1D are perspective views of screens not in accordance with the present invention;
Figure 1E is a top schematic view of a screen not in accordance with the present invention;
Figure 1F is a perspective view, of part of the screen of Figure 1D taken along the line 1F-1F, with parts cut away;
Figure 1G is an end view of part of the screen of Figure 1, taken along line 1G-1G;
Figure 2 is a perspective view of a screen not in accordance with the present invention;
Figures 3A to 3C are perspective views of screens not in accordance with the present invention; and
Figure 4A is a top plan view of a screen assembly according to the present invention, with hidden parts shown in dotted lines;
Figure 4B is an exploded end view of the screen assembly of Figure 4A;
Figure 4C is an exploded cross-sectional view of the screen assembly of Figure 4A;
Figure 5A is a top plan view of a screen component blank of the screen of Figure 4A;
Figure 5B is an exploded view of the screen component blank of Figure 5A;
Figure 5C is a side cross-section view of the screen component of Figure 5A in corrugated form;
Figure 6A is a side cross-section view of a screen component blank of the screen of Figure 4A;
Figure 6B is a top view of the screen component blank of Figure 6A;
Figure 6C is a top view of the screen component of Figure 6B with notches;
Figure 6D is a side plan view of the screen component of Figure 6A with formed ridge ends;
Figure 6E shows the profile from the side of one of the ridge ends of Figure 6D;
Figure 6F is a cross-section view of the screen component of Figure 6D;
Figure 6G shows the screen component of Figure 6D prior to end formation;

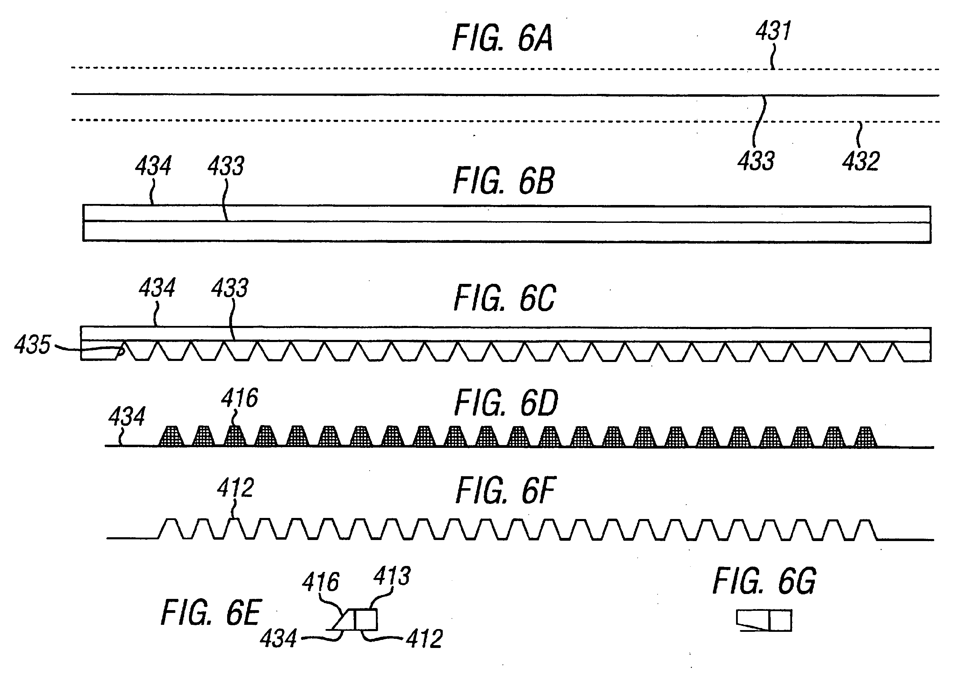

Figure 6G is a side view of the screen component of Figure 6F.

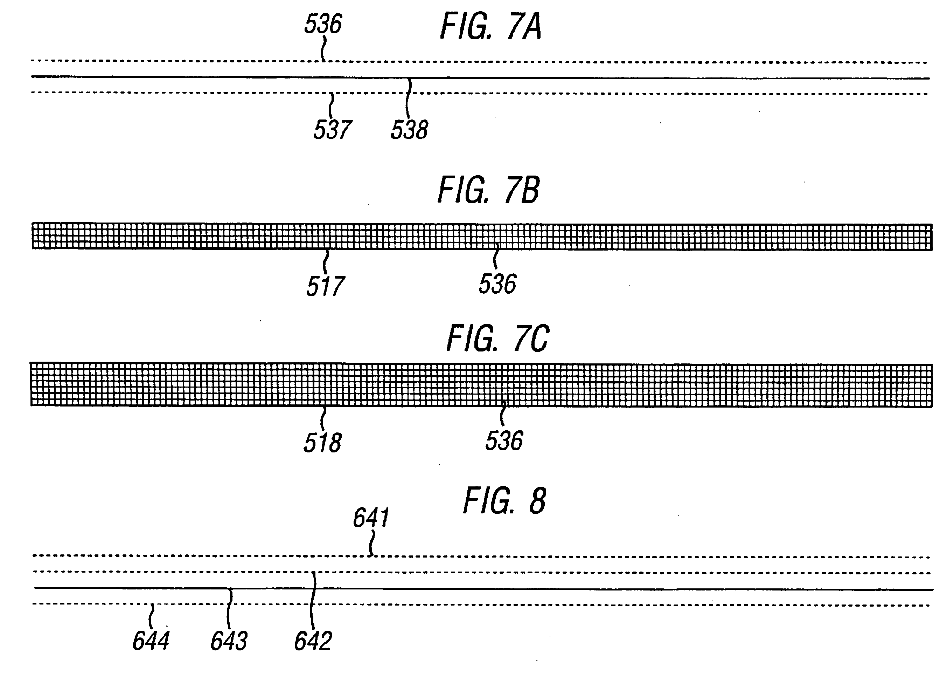

Figure 7A is an exploded cross-section view of a screen component blank of a screen assembly not in accordance with the present invention;
Figures 7B and 7C are top views of screen components not in accordance with the present invention with layers as shown in Figure 7A;

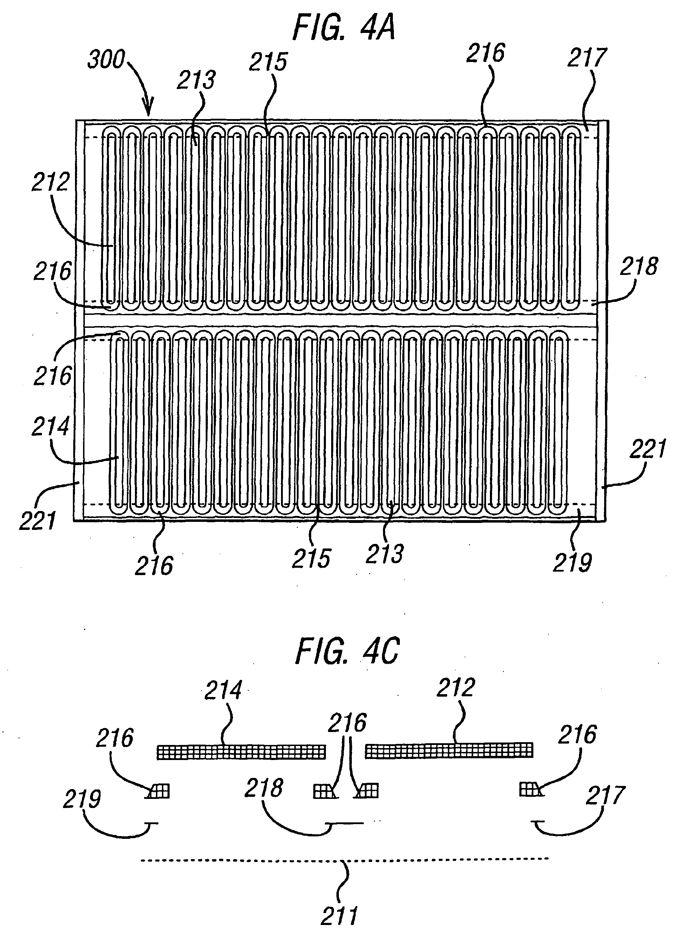

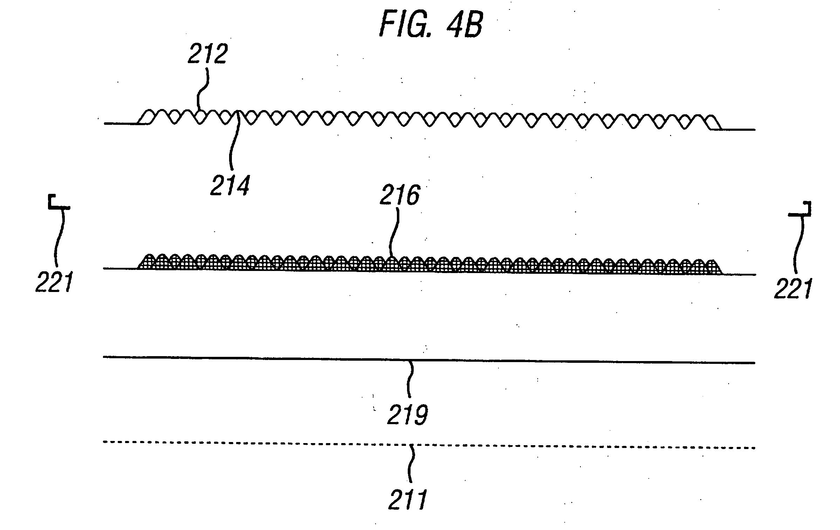

Figure 8 is an exploded cross-section view of a screen component for the screen assembly of Figure 4A;

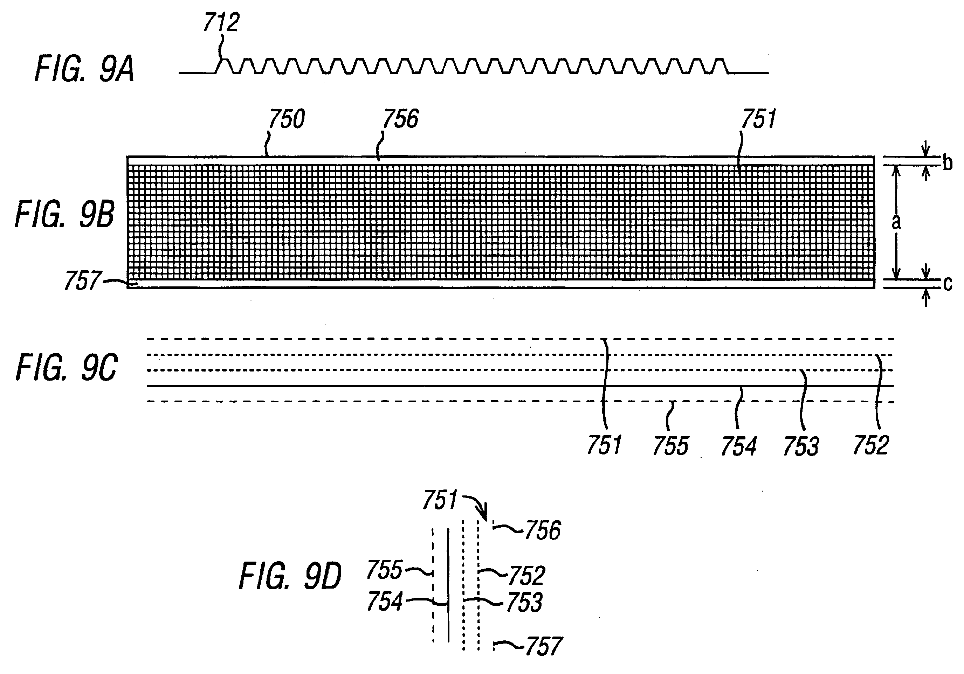

Figure 9A is a cross-sectional view of a screen component blank not in accordance with the present invention;
Figure 9B is a top plan view of a screen component blank for a screen assembly of Figure 9A;
Figures 9C and 9D are exploded cross-sectional views of part of the screen component blank of Figure 9B;

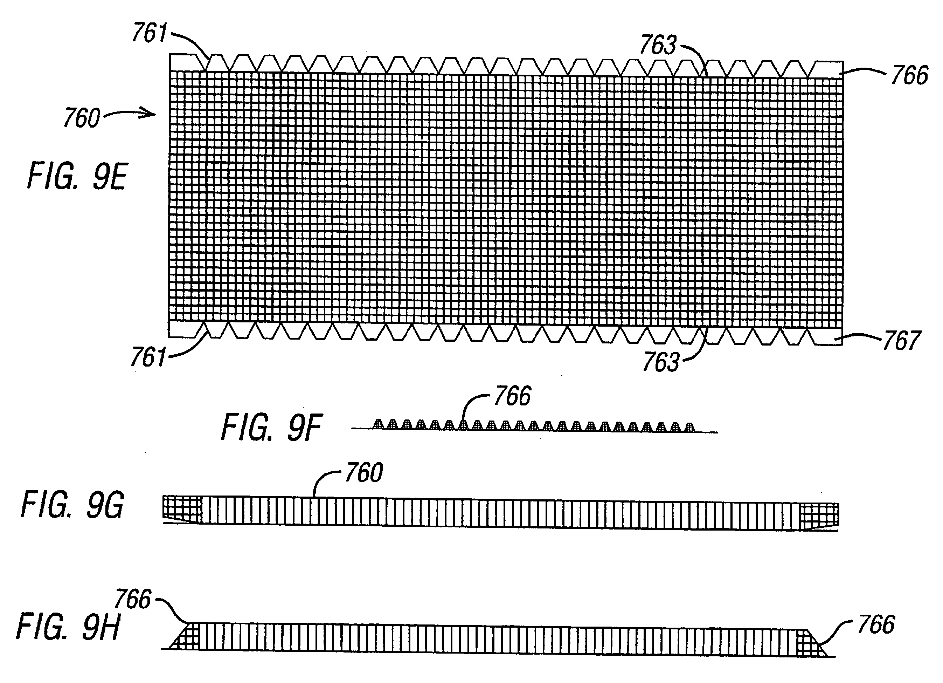

Figure 9E is a top view showing the screen component of Figure 9A with notches therein;
Figure 9F is a side view that shows the screen component of Figure 9E with formed ridge ends;
Figure 9G is a side view of the screen component of Figure 9F;
Figure 9H is a side view of the screen component of Figure 9E showing ridge end profiles;

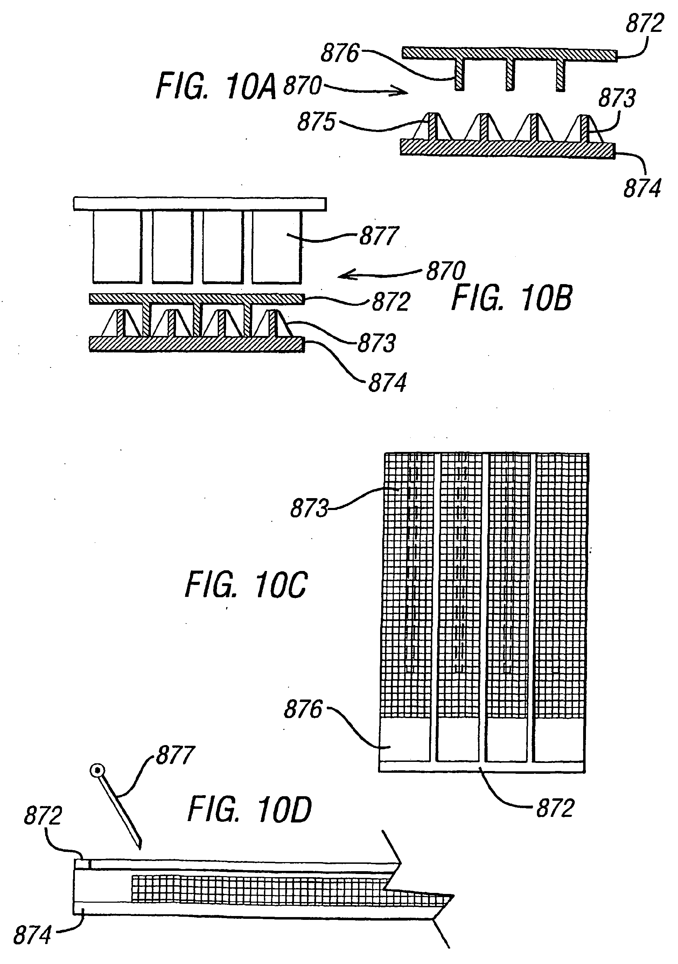

Figure 10A is a cross-sectional view of an end forming device;
Figure 10B is a cross-sectional view of the device of Figure 10A;
Figure 10C is a top view of the device of Figure 10A, in use, with hidden parts shown in dotted lines;
Figure 10D is a side view of the device of Figure 10B;

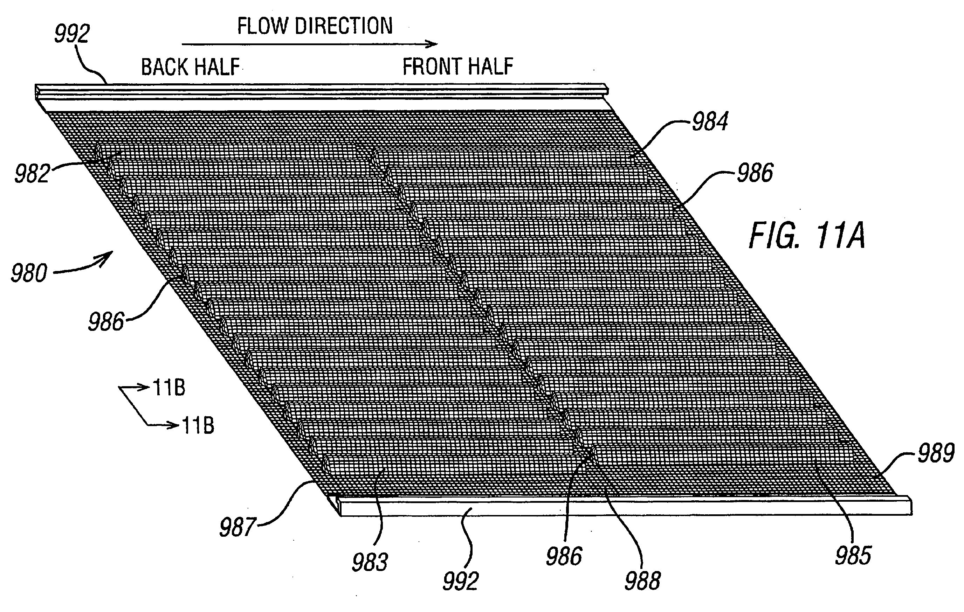

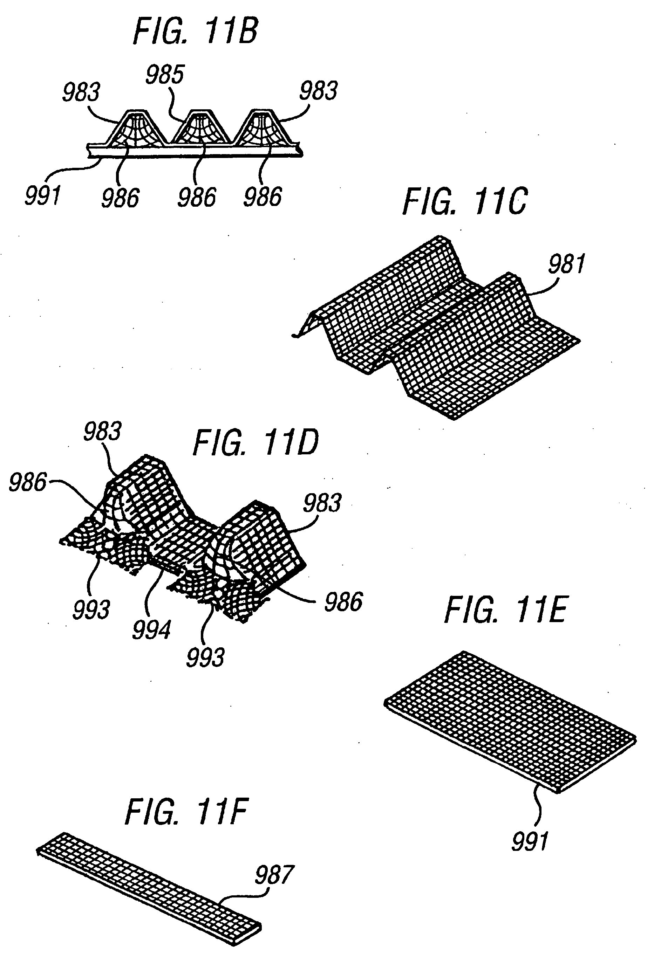

Figure 11A is a perspective view of a screen assembly according to the present invention;
Figure 11B is a partial end view of the screen assembly of Figure 11A;
Figures 11C to 11F are perspective views of parts of the screen assembly of Figure 11A;

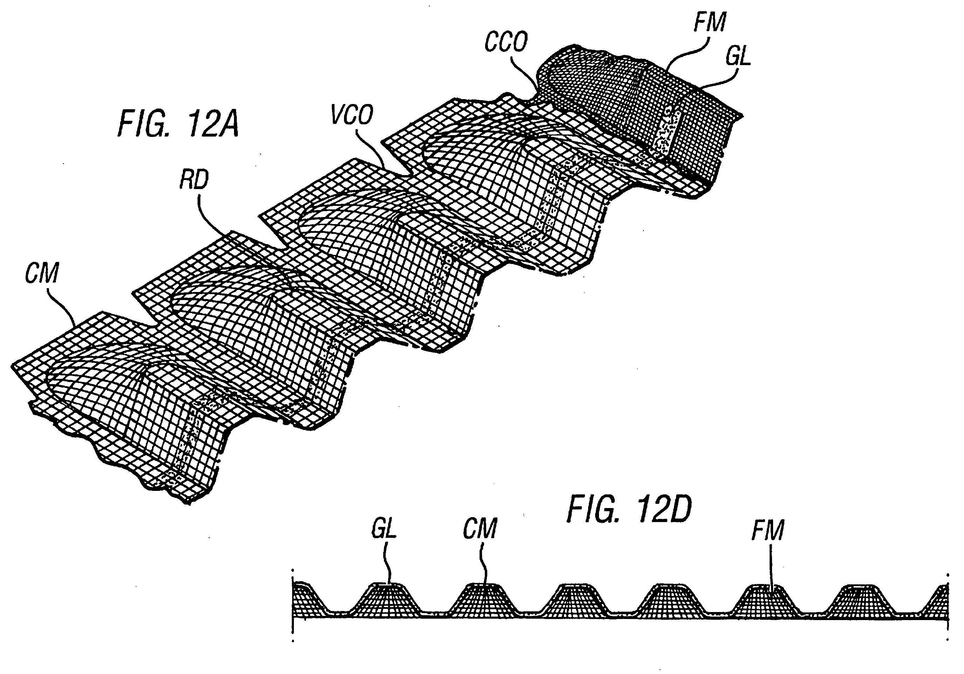

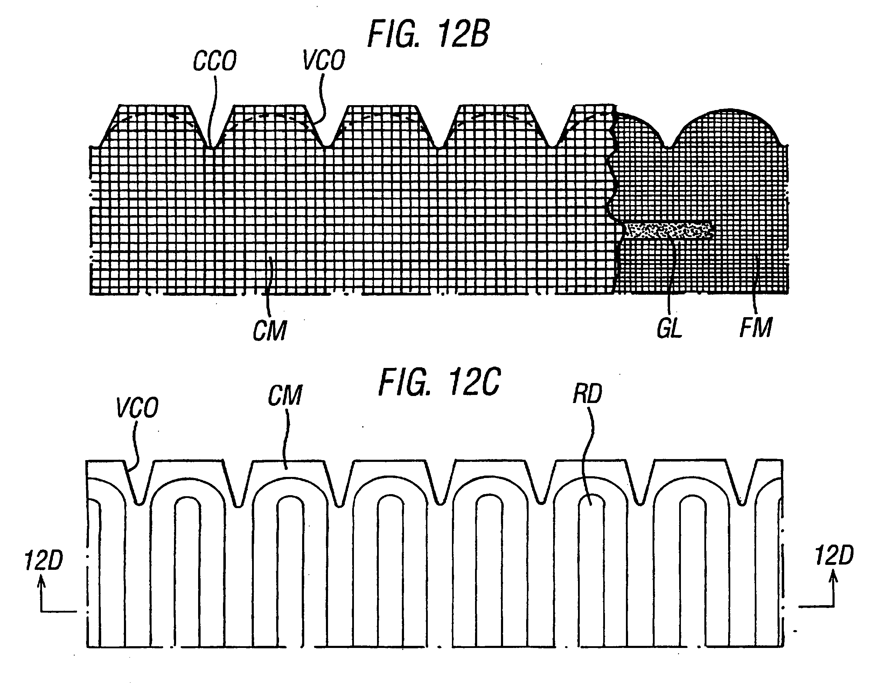

Figure 12A is a perspective view of a part of a screen in accordance with the present invention;
Figure 12B is a top plan view of a blank of the part of the screen of Figure 12A;
Figure 12C is a top plan view of the part of the screen as shown in Figure 12A;
Figure 12D is an end view of the screen of Figure 12A.

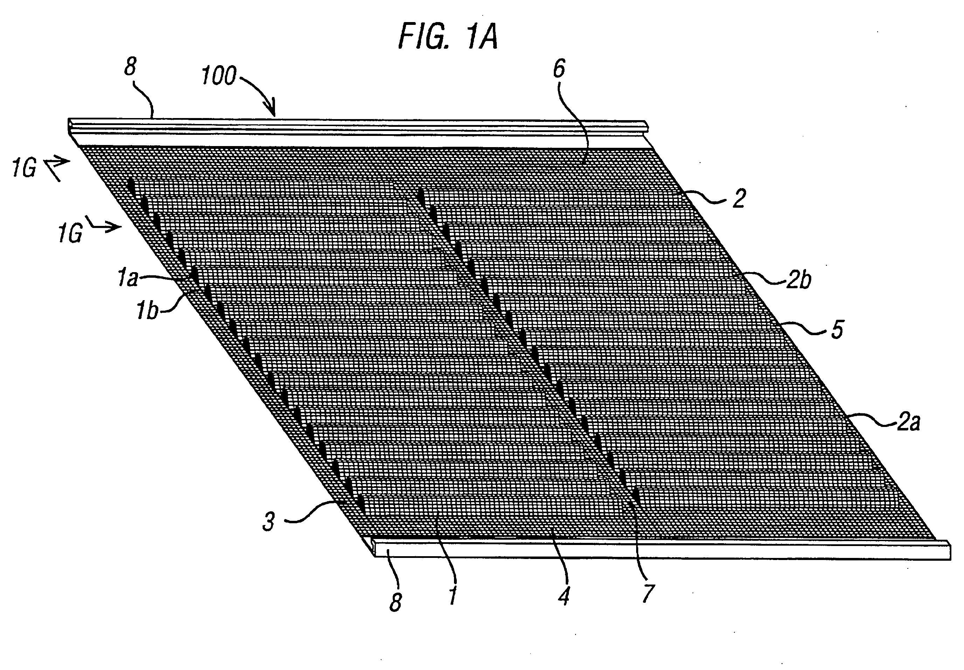

Figure 1A shows a screen assembly 100 not in accordance with the present invention, the screen assembly 100 with two offset series of ridges 1, 2 formed of screening material. Any screening material or combination thereof disclosed herein may be used or any disclosed in PCT Publication Nos. WO 00/25942, WO 00/25943 or WO 00/25890. Surrounding the ridge series 1, 2 are relatively flat areas 3 to 6 of screening material, generally of the same type as that used for the ridges, thereby allowing similar sized particles therethrough and having similar mechanical properties, such as longevity. A flat screening material area 7 separates the two series of ridges 1, 2. Optionally, hookstrips 8 are provided on two sides of the screen assembly 100. Although "C" channel shaped hookstrips are shown, any suitable hookstrip (angled, L shaped, etc.) may be used. In certain aspects (and for any screen disclosed herein), the ridge-valley series extend to the hookstrips and the flat areas are eliminated.

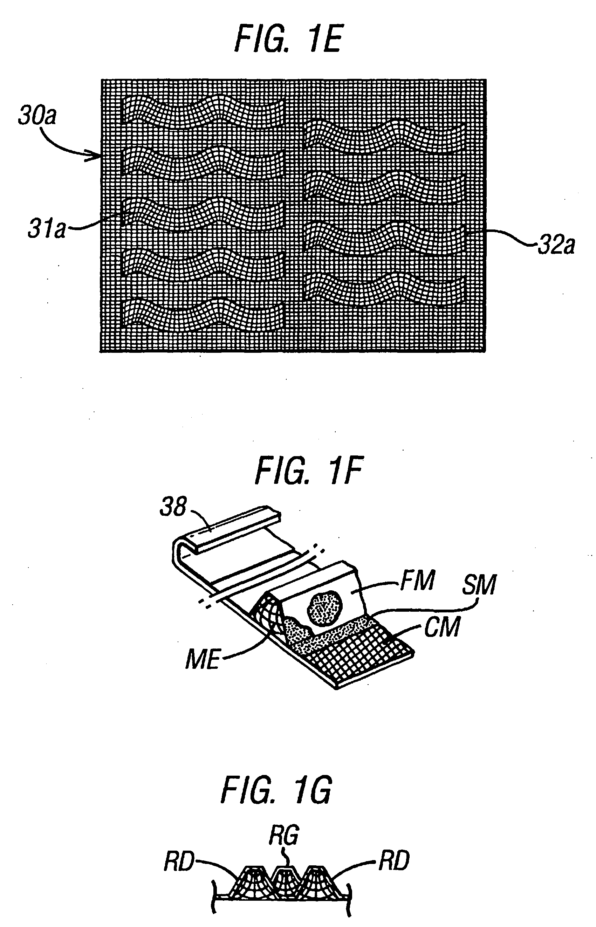

A series of ridges 1a is interspersed between the series of valleys or troughs 1b. A second series of ridges 2a and valleys 2b is offset from the ridges 1a/valleys 1b. As shown in Figure 1G the shape of one set of ridges RD may overlap (when viewed on end) the ridges RG of the other set of ridges. The ridges RD are also the same size as the ridges RG, as are the valleys. Any desired amount of such overlap may be employed. The ridges are of substantially the same height and ridge ends are of substantially the same cross-sectional area. The ridges of one set of ridges to be of a different width than those of the other set; for the one set to be wider or narrower than the second set; for ridges or ridge ends on one set to have a different cross-sectional area than those of another set; and/or to employ three, four, five, six or more series of offset ridges on a single screen. Optional side paths 4 and 6 may be eliminated by having a ridge edge or ridge adjacent a hook strip 8 side or positioned against a frame side (when an optional frame is used) or side member if hook strips are not used.

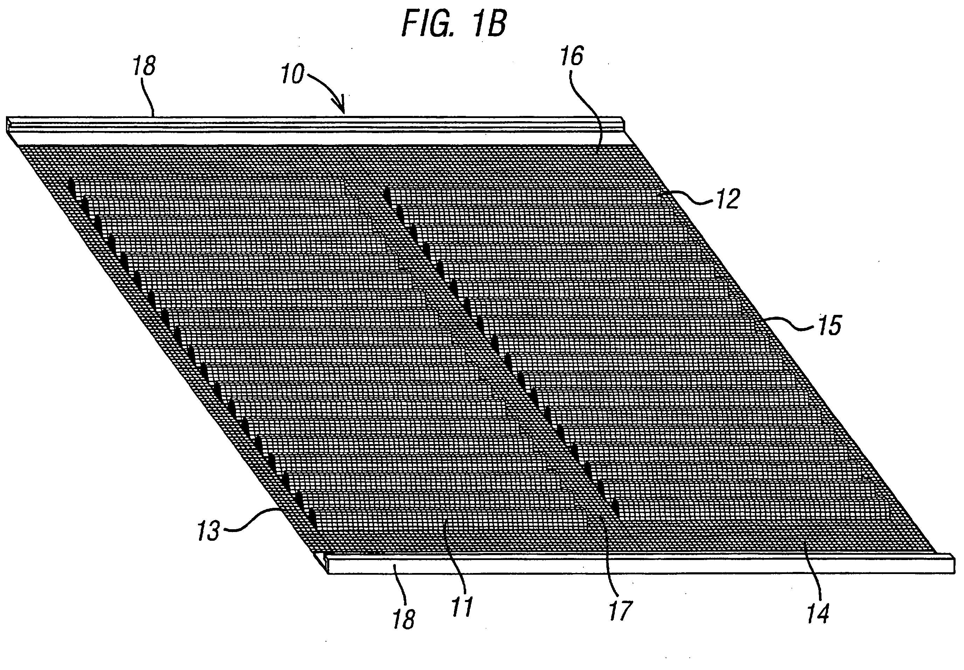

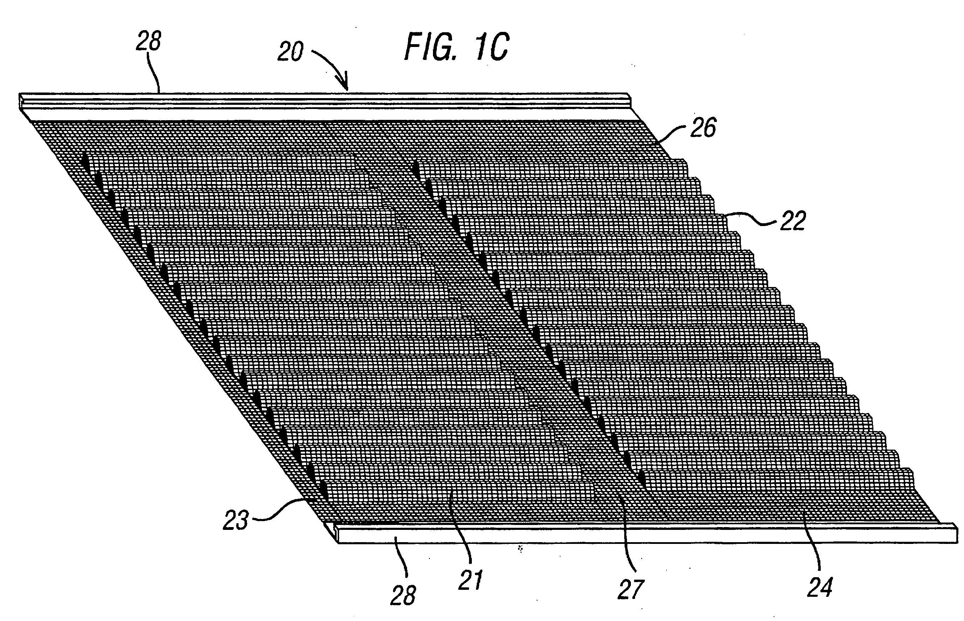

Figure 1B shows a screen assembly 10 with two offset series of ridges 11, 12 formed of screening material. Any screening material or combination thereof disclosed herein may be used or any disclosed in PCT Publication Nos. WO 00/25942, WO 00/25943 or WO 00/25890. Surrounding the ridge series 11, 12 are relatively flat areas 13 to 16 of screening material. A flat screening material area 17 separates the two series of ridges 11, 12. Optionally, hookstrips 18 are provided on two sides of the screen assembly 10. Although "C" channel shaped hookstrips are shown, any suitable hookstrip (angled, L shaped, etc.) may be used.

Figure 1C shows a screen assembly 20 with two offset series of ridges 21, 22 formed of screening material. Any screening material or combination thereof disclosed herein may be used or any disclosed in PCT Publication Nos. WO 00/25942, WO 00/25943 or WO 00/25890. Around the ridge series 21, 22 are relatively flat areas 23, 24, 26 of screening material. Flat screening material area 27 separates the two series of ridges 21, 22. Optionally, hookstrips 28 are provided on two sides of the screen assembly 20. Although "C" channel shaped hookstrips are shown, any suitable hookstrip (angled, L shaped, etc.) may be used.

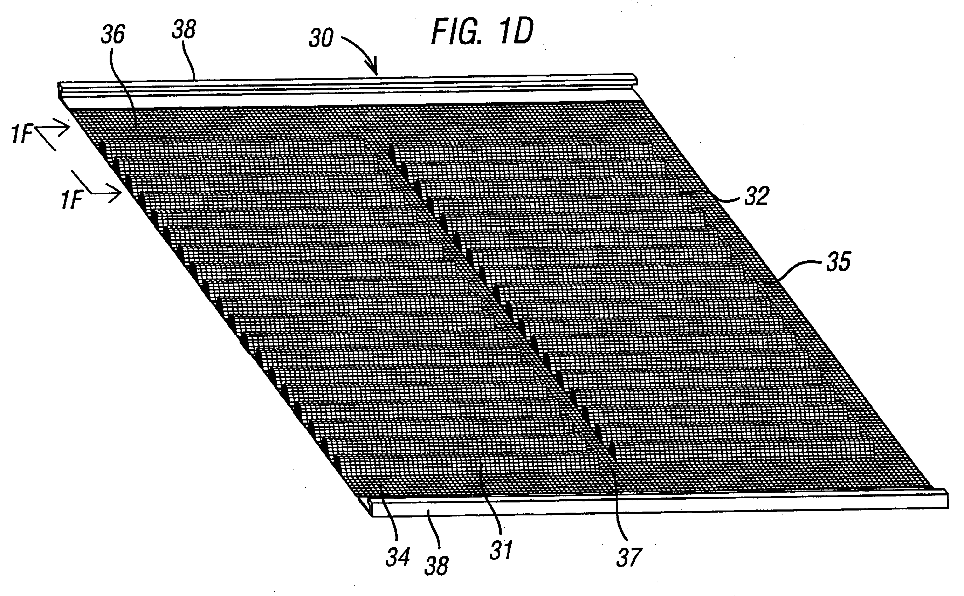

Figure 1D shows a screen assembly 30 with two offset series of ridges 31, 32 formed of screening material. Any screening material or combination thereof disclosed herein may be used. Surrounding the ridge series 31, 32 are relatively flat areas 34, 35, 36 of screening material. A flat screening material area 37 separates the two series of ridges 31, 32. Optionally, hookstrips 38 are provided on two sides of the screen assembly 30. Although "C" channel shaped hookstrips are shown, any suitable hookstrip (angled, L shaped, etc.) may be used.

Figure 1F shows a part of the screen assembly 30, showing hook strips 38 on either side thereof. Screening material SM is connected along the length of each hook strip by known methods, for example folding, welding, crimping together, epoxying, press/fiction fit, and/or interlocking of parts. In one aspect no underlying plate, straps, or strips and no frame are used with the screen assembly 30.

The screening material SM may be any known screening material, screen and/or mesh or combination thereof and/or any screening material disclosed herein. In the screen 30 as shown, the screening material SM includes a lower mesh (for example 1 to 80 mesh) CM which may be a relatively coarse mesh and an upper mesh FM (for example 8 to 400 mesh) which may be a relatively fine mesh. Two fine mesh screens and one coarse mesh screen may also be used. The fine mesh may be bonded to the coarse mesh, sewed to the coarse mesh, glued to it, welded to it, and/or sintered to it.

An optional perforated plate or a series of straps or strips such as those disclosed in WO 94/23849, may be used below the coarse mesh. One, two, three or more layers of wire mesh may be used instead of or with such a plate, straps, or strips. In one particular aspect a flat coarse mesh (for example mesh 1 to mesh 12) is used instead of or in addition to a plate, straps, or strips.

Mesh (fine, coarse, or both) is folded over open exposed ends of ridges ME. This mesh can be substantially flat over the open ridge end or, as shown, it can protrude as part of a bulb or closed curve shape. Such shape can provide more screen area for separation and can deflect and re-route solids and fluid to a subsequent set of valleys. A fine screen may underlie the coarse mesh, the fine mesh being hot-glued on to the coarse mesh end and/or to the mesh ridge. Alternatively any or all openings may be plugged with a solid, porous, or perforated plug glued or welded in place. Alternatively, instead of folding screening material and/or mesh over the ends of ridges, a separate piece of screen, screens, mesh, and/or meshes can be placed at an open ridge end and the edges of the piece attached to, connected to, interlocked with, interwoven with, and/or adhered to the edges of the ridge end opening. Any ridge end to be closed off to fluid flow, to be covered with screen(s) and/or mesh, and/or to be plugged.

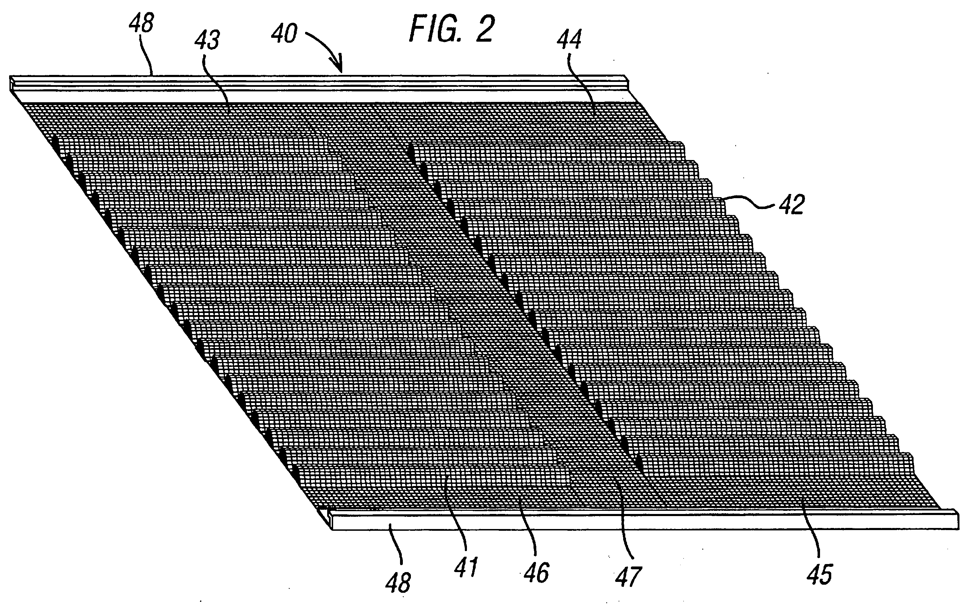

Figure 2 shows a screen assembly 40 with two offset series of ridges 41, 42 formed of screening material. Any screening material or combination thereof disclosed herein may be used. Between the ridge series 41, 42 is a relatively flat area 47 of screening material. Other flat areas 43, 44, 45, 46 are provided on sides of the ridge series. Optionally, hookstrips 48 are provided on two sides of the screen assembly 40. Although "C" channel shaped hookstrips are shown, any suitable hookstrip (angled, L shaped, etc.) may be used. "Flat areas" are to be understood as including screening material for screening fluid flowing thereto. For any screen in Figures 1A to 3C any ridge series or combination of ridge series disclosed herein may be used. One or more of any of the relatively flat areas of screening material discussed above may be used with any screen assembly or screen disclosed herein and/or with any screen or screen assembly with one, two, three, four or more series of ridges, offset or not, angled with respect to each other or not, angled with respect to sides of a frame, screen, or basket, or not (as viewed from above).

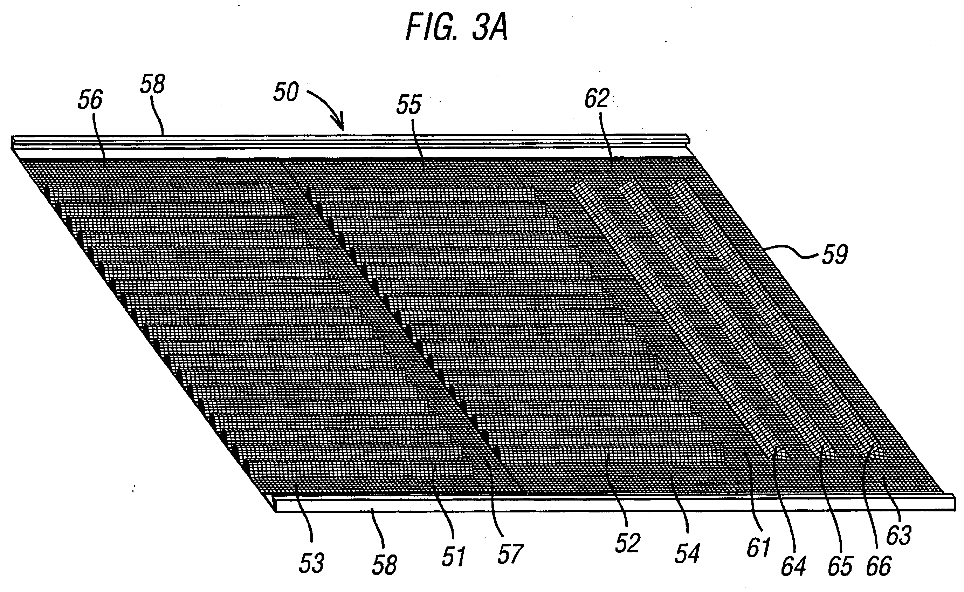

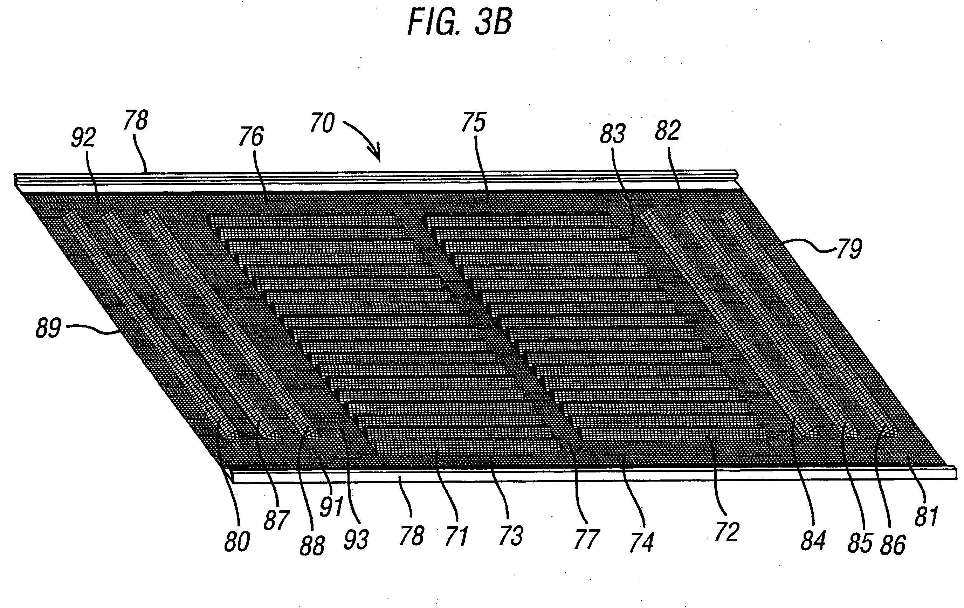

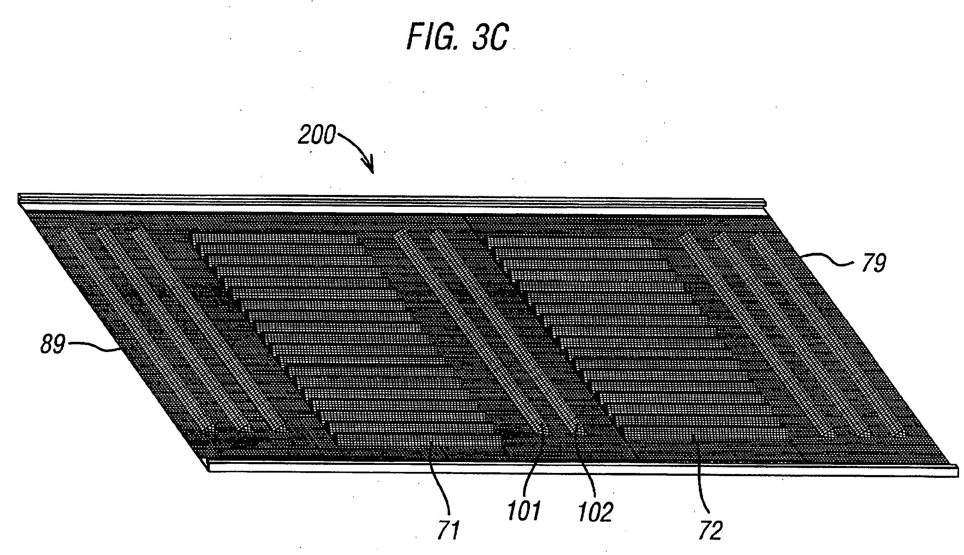

Figures 3 to 3C show screen assemblies not in accordance with the present invention which employ two series of offset ridges of screening material with one or more flat areas of screening material and one or more series of ramp screen portions as described in PCT Publication No. WO 00/25942. It is to be understood that the ridges, valleys, flat areas, and ramps are made of screening material or combinations of screening material, including, but not limited to, any disclosed herein.

Figure 3A shows a screen 50 with two series of screening material ridges 51, 52 spaced apart by a flat area of screening material 57 with flat areas 53 to 56 on sides of the series of ridges. A trailing end 59 of the screen 50 has three screening material ramps 64 to 66. Ramps for any screen disclosed herein may extend all the way to the hookstrip sides of screen. Optional hookstrips 58 are provided on two sides of the screen 50. Flat areas of screening material 61, 62, 63 are adjacent the ramp area.

Figure 3B shows a screen 70 with two series of screening material ridges 71, 72 spaced apart by a flat area of screening material 77 with flat areas 73 to 76 on sides of the series of ridges. A trailing end 79 of the screen 70 has three screening material ramps 84 to 86. Optional hookstrips 78 are provided on two sides of the screen 70. Flat areas of screening material 81, 82, 83 are adjacent the ramp area. A leading end 89 has three screening material ramps 80, 87, 88 with adjacent flat areas 91 to 93 like the areas 81 to 83.

Figure 3C shows a screen 200 like the screen 70 of Figure 3B (and like numerals indicate the same parts), but instead of the central flat area 77, the screen 200 has two central ramps of screening material 101, 102. One, three, or more ramps may be used in this central area (as may be used instead of the three ramp areas of Figures 3A and 3B).

In alternative embodiments, any screen of Figures 1A to 3C may have lower supporting relatively coarse mesh, lower mesh or mesh layers, or a lower support frame, apertured plate, perforated plate and/or strap member or series of spaced-apart straps or strips.

For any of the screens of Figures 1A to 3C: all ridge ends may be plugged with a solid plug or a perforated plug; glued shut; all ends at or closest to a leading screen end or a trailing screen end may be sealingly closed and opposite ends of the ridge series open, or vice versa; any (or all) ridge end may be covered with screening material. In one particular embodiment in the screens of Figures 1A to 3C, the first ridge series (the one closest to a screen leading end, to the left in each Figure) has its ridge ends closest to the leading end of the screen assembly (the end at which fluid is introduced) covered with screening material and the other ends of the same ridges open, or vice-versa. Alternatively all ridge ends are covered with screening material. Screening material covering a ridge end may be a separate piece connected to the ridge end edges or it may be a continuation of the screening material forming the ridge-valley series, folded over on the ridge end. In certain aspects each of the screens in Figures 1A to 3C have no screening material below the ridge-valley series or a coarse screen cloth below them. In other aspects there is one or more layers of fine screening material below the ridge-valley series so that the ridges and the relatively flat screening material below the ridges define a porous tube of screening material through which fluid can flow. Fluid entering such a tube and flowing therein for some distance can flow out the ridge sides into a valley adjacent the ridge and then back into the ridge's interior, and so on, and so on. For each screen in Figures 1A to 3C and other screens disclosed above the ridges as shown as following relatively straight lines as viewed from above. But any such screen may have ridges with an undulating shape as viewed from above.

Ridges with an undulating or curved shape as viewed from above is shown in Figure 1E. A screen 30a (like the screen 30 but for the ridges and flat areas) has two series of offset ridges 31a and 32a. The ridges (and therefore valleys 31b and 32b, respectively) have an undulating shape as viewed from above. Any number of ridges (wider or narrower than shown) may be used as may be any number (one, two, three, four) of series of ridges. Alternatively one series of ridges is not offset from an adjacent series.

Figures 4A to 4C illustrate a screen assembly 300 according to the present invention which has two rows 212, 214 of corrugated screening material, each row including an undulating series of alternating ridges 213 and valleys 215; formed ridge ends 216 at the ends of each ridge; mesh strips 217, 214, 219 between the rows 212, 214; and an optional mesh layer 211 beneath the strips 217 to 219. Alternatively a supporting layer of woven mill cloth may be used as support backing (which is not the legal equivalent of a perforated plate or frame).

The ridge ends 216 may be formed in any suitable manner, including, but not limited to: by pushing out a portion of the screening material in the desired non-flat shape, e.g. by hand or with a suitably shaped curved or rounded tool e.g., but not limited to a curved or rounded tool; with an apparatus or jig having one or a plurality of tools, shafts, plates, or bars (which may, in at least certain aspects, have curved or rounded portions) which are forced against the screening material (or against which the screening material is forced); or by a similar apparatus with a plurality of tools, etc. that forms the entire ridge with the non-flat ridge ends in one or more impressions on the screening material. Ridge ends may also be formed by die stamping screening material. In one aspect laser perforated material, e.g. between 13 to 34 gauge thick may be used and/or commercially available material between .20 mm to 2.00 mm thick with minimum hole widths from 40 to 14 microns e.g. as available from ActionLaser Pty. Ltd. of Australia. Alternatively or in addition to any of these methods: notches and/or slits are made in the screening material to facilitate ridge end formation, such as those shown in Figure 12A to D identified by reference CCO and VCO; separate pieces of screening material are used to form a ridge end portion which is then connected to the ridge/valley portions of screening material; and/or additional and/or different mesh and/or screening material is added to the ridge/valley screening material at points of stress, curving, or bending and/or at the area of ridge end formation.

Figures 4A to 4C shows a composite screen, made up of a two main undulating screens 212, 214 and ridge ends 216. The main screen may comprise a fine upper mesh adhered or otherwise joined to a lower coarse mesh. The ridge ends may comprise a coarse upper mesh adhered or otherwise joined to a lower fine mesh. The ridge ends may interengage with the ridges of the main screen. The upper coarse mesh of the ridges may be glued or otherwise adhered to the lower coarse mesh of the main screen.

In one aspect as shown in Figures 4A to 4C hookstrip sides 221 are secured on two sides of the screening material of the screen assembly 300. Any known hook or hookstrip mounting structure may be used. Alternatively a four-sided frame and/or a series of lower support strips or straps may be used or a support layer of mesh or mill cloth may be used.

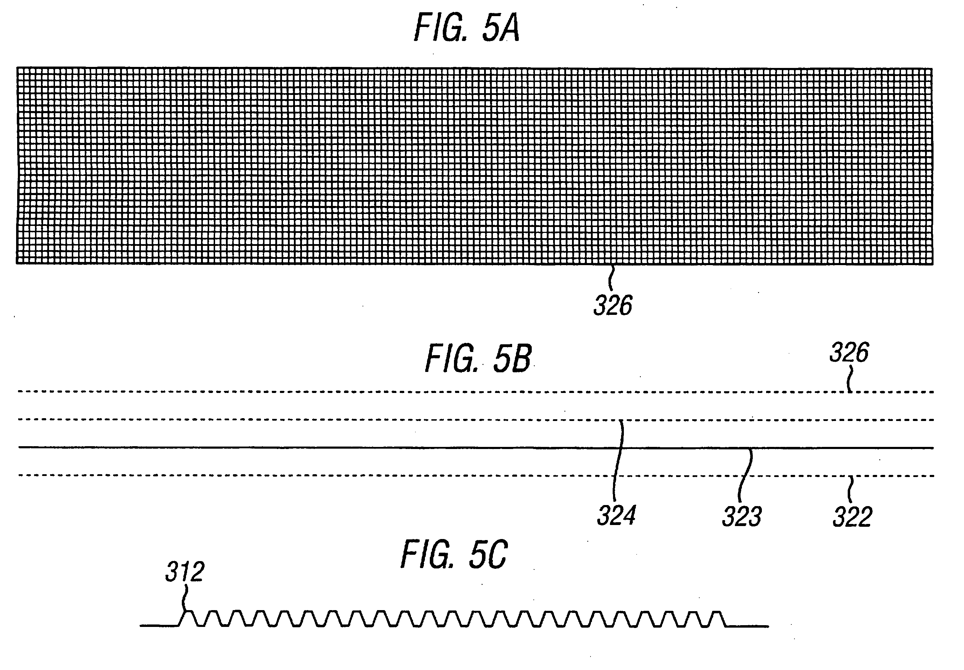

Figures 5A to 5C show a row 212 of corrugated screening material not in accordance with the present invention. The rows 212, 214 to be made of any screening material and/or mesh, including, but not limited to, any disclosed herein and for their to be one, two, three, four or more rows like the row 212 or the row 14 in any combination, with multiple layers of material bonded together or not.

Figure 5B is an exploded view of the row 212 prior to corrugation (shown in Figure 5C). A support mesh 322 (e.g. 6 mesh to 1 mesh) is adhered, taped or glued to (e.g. with material 323 glue, plastic, adhesive, hot glue melt or tape) and beneath a middle layer 324 of material (e.g. synthetic or wire mesh of 30 mesh to 300 mesh or screening material. A top wire or synthetic mesh layer 326 (e.g. 50 mesh to 500 mesh) rests on (and is, optionally, adhered to, welded to, or spot welded to the middle layer 24). The material 32 may be applied in strips of between 0.5 and 1cm in width in parallel lines perpendicular to the longitudinal axis of the ridges, or may be applied in a grid having a square or diamond pattern, or any other suitable pattern.

Figures 6A to 6G illustrate one method and structure for forming the non-flat ridge ends 216 of the screen assembly 300. A layer of wire mesh 431 (e.g. 30 to 500) or synthetic mesh is placed on a lower support layer 432 (e.g. of wire mesh 12 mesh to 50 mesh or of synthetic mesh) and the two are connected together with a strip 433 of glue adhesive or plastic in any suitable known manner, including, but not limited to, by gluing, welding, plastic or plastic grid heating fusing, taping, or with any suitable adhesive (as can be done to connect together any two layers of any structure or screen disclosed herein). A resulting laminated screen section 434 has notches 435 cut out of it to facilitate ridge end formation. Figure 6D shows the ridge ends 216 formed on the section 434. Their number, shape and configuration correspond, e.g. tot he ridges 213 and valleys 215 of the corrugated row 212 of the screen 300 (Figure 4A). The section 234 is then connected to the corrugated screen material so that a non-flat ridge end coincides with and corresponds to each ridge end. Figure 6G is a side view of the component of Figure 6F prior to end formation.

As shown in Figure 6E, the non-flat ridge ends 16 taper from a level of a top of a ridge 213 down to a bottom level of the row 212 (and a bottom level of the section 434. Also, in one aspect as shown, the entire ridge end 216 is above and within (to the right of in Figure 6E) the perimeter of the resulting screen's screening material. This in-the-perimeter disposition of the ridge ends is also illustrated in Figure 4A. Alternatively, the ridge ends may project beyond this perimeter.

Figure 7A illustrates one embodiment of the strips 217 to 219. A wire mesh (30 mesh to 50 mesh) or synthetic mesh layer 536 is connected to a support mesh layer 537 (e.g. 12 mesh to 50 mesh) e.g. by glue 538 (plastic, or adhesive tape, etc.).

Figure 8 illustrates an alternative layer structure (e.g. but not limited to for the rows 212, 214) that includes a top layer 641 of wire mesh or synthetic mesh (30 mesh to 500 mesh; ("synthetic" includes, but is not limited to plastic, Nylon, polypropylene, urethane and polyethylene); a middle layer 642 of relatively fine mesh (30 mesh to 300 mesh); connection layer 643 (glue, etc.); and a lower support layer 644 e.g. of 12 mesh to 50 mesh. A connection layer 643 (and any glue layer herein) may be a grid or pattern of glue, plastic, etc. in any desired pattern or configuration.

Figures 9A to 9D illustrate an embodiment for producing rows 212, 214 for the screen 300 (Figure 4A). The row 214 (or the row 212 or any now disclosed herein) can be eliminated and the row 212 (or any now disclosed herein) enlarged to cover substantially all of the area of the screen assembly. A laminated screen section 750 has a support layer 751 of two strips 756, 757 (e.g. 12 mesh to 30 mesh) on a wire or synthetic mesh layer 752 (e.g. 30 mesh to 500 mesh) on a wire or synthetic mesh layer 753 (e.g. 30 mesh to 300 mesh) connected by a (e.g. with a glue, etc.) layer 754 to a support mesh layer 755 (e.g. 12 mesh to 50 mesh).

As shown in Figures 9B and 9D the support mesh 751 includes two spaced-apart strips 756, 757 (for illustration purposes the strips 756, 757 are not shown with cross-hatching) which do not extend across the entire screen section. Portions "b" and "c" (corresponding to strips 756, 757 include only the top mesh 751 and the middle layer 753. Portion "a" includes the layers 752 to 755 and not layer 751.

Figure 9E shows the mesh in Figure 9B, but with notches. Figure 9E illustrates a screen section 760 (e.g. like the section 750, Figure 9B). Notches 761 have been cut in strips 766, 767 (like the strips 756, 757, Figure 9B. Strips of glue 763 (like the glue strip 433, Figure 6B) extend along two sides of the section 760 to attach the strips to layers 752 to 755. The ridge ends (e.g. items 216, Figure 4C) are formed of the strips 756, 757. As shown in Figures 9F and 9H, non-flat ridge ends 766 (like the ridge ends 216) are formed on the sides of the section 760. Figure 9G shows the screen of Figure 9E with material corrugated and ridge ends not yet formed.

Figures 10A to 10C show an end forming jig 870 with a top device 872 movable to co-act with a bottom device 874. As shown in Figure 10B the top device 872 has moved down with respect to the bottom device 874. Corrugated screening material 873 with ends sticking out is positioned on the bottom device 874 over a plurality of spaced-apart bars 875. Bars 876 of the top device 872 move down to contact troughs or valleys of the screening material 873 to form the non-flat ridge ends. Members 877 connected to a guide bar 878 are movable downwardly to form the ridge ends. The bars 876 are shown in outline in Figure 10C. Bar 872 holds the bars 876 in place. Such a jig may be used either to form end pieces that are later connected to a piece of screening material or an entire piece of screening material may be positioned adjacent the jig to form ends in a portion of the entire piece. Any composite multi-layer piece of screening material described herein may be used.

Figures 11A to 11F show a screen assembly 980 according to the present invention and parts thereof. The screen assembly 980 has two rows 982, 984 of corrugated screening material (like rows 212, 214, Figure 4A or like any rows or corrugated screening material herein). Strips 987, 988, 989 are like strips 217, 218, and 219 of the screen assembly 300, Figure 4A. Alternatively the strip 988 may be omitted. Ridge ends 986 of ridges 983, 985 are like ridge ends 216, Figure 4A (or any other ridge ends disclosed herein). The strips 987 to 989 are on a support mesh layer (or woven mill cloth) 91. Figure 11C shows a portion 981 of one of the rows 982, 984. Hookstrips 992 are along two sides of the screen assembly 980. In one aspect, fluid to be treated, e.g. drilling fluid with mud solids entrained therein, flows first to the row 982 and then to the row 984 (left to right in Figure 11A). In other aspects this direction may be reversed.

Figure 11D shows steps in one method for forming the ridge ends 986. Notches 993 and optional notches 994 are made in the screening material to facilitate formation of the ridge ends.

Referring now to Figures 12A to 12D, there is shown a screen assembly which may be integral with a main screen or be attachable to a main screen by gluing, stapling, weaving or any other suitable attachment means. Figure 12C shows a blank coarse screening material CM comprising v-shaped slots VCO between each ridge RD to be formed in the blank. A fine mesh FM is arranged underneath the coarse Mesh CM. C-shaped curves are formed in the fine mesh FM between each ridge RD to be formed therein. The coarse mesh CM is adhered and moulded with the fine mesh FM. The coarse mesh CM is adhered to the fine mesh FM with a strip of glue running substantially perpendicular to the longitudinal axis of the ridges RD.

In this embodiment, the ridges are approximately 5cm across at their base, having a flat top to the ridge of approximately 1cm wide. The ridge stands approximately 2.5cm from the valley. The V-shaped slots VCO are approximately 2.5cm long and 2cm wide at the opening.

## Claims

1. A screen assembly for a shale shaker for separating particles from a particle laden drilling mud, the screen assembly comprising a screen (212,214;981) of undulating mesh comprised of a plurality of alternating ridges (213) and valleys (215), **characterised in that** said screen assembly further comprises ridge ends (216;986) at either end of said plurality of alternating ridges (213) and valleys (215), each ridge end (216;986) comprising a plurality of alternating ridges (983) and valleys of mesh having integral moulded seamless portions of mesh covering ends of said ridges wherein slots or notches (994;VCO,CCO) are cut in said ridge end in order to facilitate moulding.

2. A screen assembly as claimed in Claim 1, wherein said integral moulded seamless portions of mesh tapers down from said ridges (983) to said valleys.

3. A screen assembly as claimed in Claim 1 or 2, having an outer perimeter and wherein an outermost edge of each of said integral moulded seamless portion of mesh covering each end of each ridge (216;986) at the level of the mesh at the ridge bottom is within the outer perimeter.

4. A screen assembly as claimed in any of Claims 1 to 3, wherein said integral moulded seamless portions of mesh covering ends of said ridges (216;986) is formed integrally with said screen.

5. A screen assembly as claimed in any of Claims 1 to 3, ridge end (216;986) is separate and attachable to said screen.

6. A screen assembly as claimed in Claim 5, wherein said ridge end (216;986) is attached to said screen by at least one of the following: gluing; stapling; and weaving.

7. A screen assembly as claimed in any preceding claim, wherein said slots (993,994;VCO,CCO) are v-shaped.

8. A screen assembly as claimed in preceding claim, wherein said notch or slot has a curved end (CCO).

9. A method for separating particles from a particle laden drilling mud with a shale shaker, the method comprising the steps of introducing the particle laden drilling mud onto a screen assembly in the vibratory separator, the screen assembly comprising a screen of undulating mesh comprised of a plurality of alternating ridges and valleys, said screen assembly further comprising ridge ends at either end of said plurality of alternating ridges and valleys, each ridge end comprising a plurality of alternating ridges and valleys of mesh having integral moulded seamless portions of mesh covering ends of said ridges wherein slots or notches are cut in said ridge end in order to facilitate moulding and further comprising the step of separating particles from the drilling mud by vibrating the screen assembly in the shale shaker.

10. The method as claimed in Claim 9, wherein said integral moulded seamless portions of mesh tapers down from said ridges to said valleys.

## Patentansprüche

1. Siebanordnung für ein Schlarnmschüttelsieb zum Abtrennen von Teilchen aus einem mit Teilchen beladenen Bohrschlamm, wobei die Siebanordnung ein Sieb (212, 214; 981) aus einem in Wellen verlaufenden Maschengitter aufweist, das mehrere abwechselnd angeordnete Rippen (213) und Täler (215) aufweist, **dadurch gekennzeichnet, dass** die Siebanordnung ferner Rippenenden (216; 986) auf beiden Seiten der mehreren abwechselnd angeordneten Rippen (213) und Täler (215) aufweist, wobei jedes Rippenende (216; 986) mehrere abwechselnd angeordnete Rippen (983) und Täler des Maschengitters aufweist, die jeweils einstückige, nahtlos geformte, die Enden der Rippen abdeckende Bereiche aus Maschengitter aufweisen, wobei Schlitze oder Nuten (294; VCO, CCO) in das Rippenende geschnitten sind, um das Formen zu erleichtern.

2. Siebanordnung nach Anspruch 1, wobei die einstückigen, nahtlos geformten Bereiche aus Maschengitter sich konisch nach unten von den Rippen (983) zu den Tälern erstrecken.

3. Siebanordnung nach Anspruch 1 oder 2, die einen äußeren Umfang hat und wobei ein äußerer Rand jedes einstückigen, nahtlos geformten Bereiches aus Maschengitter, der jedes Ende jeder Rippe (216; 986) im Niveau des Maschengitters am Boden der Rippen abdeckt, in dem äußeren Umfang liegt.

4. Siebanordnung nach einem der Ansprüche 1 bis 3, wobei die einstückigen nahtlos geformten Bereiche aus Maschengitter, die die Enden der Rippen (216; 986) abdecken, einstückig mit dem Sieb geformt sind.

5. Siebanordnung nach einem der Ansprüche 1 bis 3, wobei das Rippenende (216; 986) ein separates Teil und mit dem Sieb verbindbar ist.

6. Siebanordnung nach Anspruch 5, wobei das Rippenende (216; 986) mit dem Sieb durch Kleben, Klammern oder Weben verbunden ist.

7. Siebanordnung nach einem der vorhergehenden Ansprüche, wobei die Schlitze (993, 994; VCO, CCO) v-förmig sind.

8. Siebanordnung nach einem der vorhergehenden Ansprüche, wobei der Schlitz oder die Nut ein abgerundetes Ende (CCO) aufweist.

9. Verfahren zum Abtrennen von Teilchen aus einem mit Teilchen beladenen Bohrschlamm mit einem Schlammschüttelsieb, wobei das Verfahren die Schritte aufweist, den mit Teilchen beladenen Bohrschlamm auf eine Siebanordnung der Vibrations-Trenneinrichtung aufzugeben, wobei die Siebanordnung ein Sieb (212, 214; 981) aus einem in Wellen verlaufenden Maschengitter aufweist, das mehrere abwechselnd angeordnete Rippen (213) und Täler (215) aufweist, und die Siebanordnung ferner Rippenenden (216; 986) auf beiden Seiten der mehreren abwechselnd angeordneten Rippen (213) und Täler (215) aufweist, wobei jedes Rippenende (216; 986) mehrere abwechselnd angeordnete Rippen (983) und Täler des Maschengitters aufweist, die jeweils einstückige, nahtlos geformte, die Enden der Rippen abdeckende Bereiche aus Maschengitter aufweisen, wobei Schlitze oder Nuten (294; VCO, CCO) in das Rippenende geschnitten sind, um das Formen zu erleichtern, wobei das Verfahren ferner den Schritt aufweist, die Teilchen aus dem Bohrschlamm durch Vibrationen der Siebanordnung in dem Schlammschüttelsieb abzutrennen.

10. Verfahren nach Anspruch 9, wobei die einstückigen, nahtlos geformten Bereiche aus Maschengitter sich konisch nach unten von den Rippen (983) zu den Tälern erstrecken.

## Revendications

1. Assemblage de tamis pour tamis vibrant, pour séparer les particules d'une boue de forage chargée de particules, l'assemblage de tamis comprenant un tamis (212, 214 ; 981) à maillage ondulé constitué d'une pluralité de crêtes (213) et de vallées (215) alternées, **caractérisé en ce que** ledit assemblage de tamis comprend en outre des extrémités de crête (216 ; 986) à l'une des extrémités de ladite pluralité de crêtes (213) et de vallées (215) alternées, chaque extrémité de crête (216 ; 986) comprenant une pluralité de crêtes (983) et de vallées en maillage alternées comprenant des parties en maillage, sans joint, moulées d'une seule pièce recouvrant les extrémités desdites crêtes dans lesquelles des fentes ou des encoches (994 ; VCO, CCO) sont formées dans ladite extrémité de crête pour faciliter le moulage.

2. Assemblage de tamis selon la revendication 1, dans lequel lesdites parties en maillage, sans joint, moulées d'une seule pièce s'effilent vers le bas depuis lesdites crêtes (983) vers lesdites vallées.

3. Assemblage de tamis selon la revendication 1 ou 2, ayant un périmètre externe et dans lequel un bord le plus externe de chacune desdites parties en maillage, sans joint, moulées d'une seule pièce recouvrant chaque extrémité de chaque crête (216 ; 986), au niveau du maillage situé en bas de la crête, se trouve sur le périmètre externe.

4. Assemblage de tamis selon l'une quelconque des revendications 1 à 3, dans lequel lesdites parties en maillage, sans joint, moulées d'une seule pièce recouvrant les extrémités desdites crêtes (216 ; 986) sont formées d'une seule pièce avec ledit tamis.

5. Assemblage de tamis selon l'une quelconque des revendications 1 à 3, dans lequel ladite extrémité de crête (216 ; 986) est séparée et peut se fixer sur ledit tamis.

6. Assemblage de tamis selon la revendication 5, dans lequel ladite extrémité de crête (216 ; 986) est fixée audit tamis par au moins un des moyens suivants : collage ; agrafage ; et tissage.

7. Assemblage de tamis selon l'une quelconque des revendications précédentes, dans lequel lesdites fentes (993, 994 ; VCO, CCO) sont en forme de V.

8. Assemblage de tamis selon la revendication précédente, dans lequel ladite fente ou encoche présente une extrémité incurvée (CCO).

9. Procédé de séparation de particules d'une boue de forage chargée de particules avec un tamis vibrant, le procédé comprenant les étapes consistant à introduire la boue de forage chargée en particules sur un assemblage de tamis dans le tamis vibrant, l'assemblage de tamis comprenant un tamis à maillage ondulé constitué d'une pluralité de crêtes et de vallées alternées, ledit assemblage de tamis comprenant en outre des extrémités de crête à l'une des extrémités de chacune de ladite pluralité de crêtes et de vallées alternées, chaque extrémité de crête comprenant une pluralité de crêtes et de vallées en maillage alternées comprenant des parties en maillage, sans joint, moulées d'une seule pièce recouvrant les extrémités desdites crêtes, dans lequel des fentes ou des encoches sont formées dans ladite extrémité de crête pour faciliter le moulage et comprenant en outre l'étape consistant à séparer les particules de la boue de forage en faisant vibrer l'assemblage de tamis dans le tamis vibrant.

10. Procédé selon la revendication 9, dans lequel lesdites parties en maillage, sans joint, moulées d'une seule pièce s'effilent vers le bas depuis lesdites crêtes vers lesdites vallées.
